# EUROPÄISCHE PATENTSCHRIFT

(11) **EP 3 757 178 B1**
(45) Veröffentlichungstag und Bekanntmachung des Hinweises auf die Patenterteilung: **08.09.2021**
(21) Anmeldenummer: 19182230.3
(22) Anmeldetag: 25.06.2019
(51) Int. Cl.: C09D 11/324, C09D 11/328

(54) **VERFAHREN ZUR HERSTELLUNG VON MINDESTENS EINEM MIT EINEM DRUCKDEKOR VERSEHENEN TRÄGERMATERIAL**
PRODUCTION METHOD FOR AT LEAST ONE MATERIAL WITH PRINTED DECORATIVE ELEMENT
PROCÉDÉ DE FABRICATION D'AU MOINS UN MATÉRIAU PORTEUR POURVU D'UN DECOR IMPRIMÉ

(43) Veröffentlichungstag der Anmeldung: 30.12.2020
(73) Patentinhaber: Flooring Technologies Ltd., Kalkara SCM1001 (MT)
(72) Erfinder: Oldorff, Frank, 19057 Schwerin (DE)
(74) Vertreter: Maikowski & Ninnemann Patentanwälte Partnerschaft mbB

(56) Entgegenhaltungen:
- EP-A1- 1 935 659
- EP-A1- 2 236 313
- EP-A1- 2 774 770
- EP-A1- 2 865 528
- EP-A1- 2 980 313

## Beschreibung

Die vorliegende Erfindung betrifft ein Verfahren zur Herstellung von mit einem Druckdekor versehenen Trägermaterial, insbesondere ein bedrucktes Papier oder eine bedruckte Werkstoffplatte.

### Beschreibung

Mit einem Dekor versehene Trägermaterialien, wie z.B. Holzwerkstoffplatten, werden typischerweise als Bodenbelagselemente oder zur Verkleidung von Wänden und Decken verwendet. Hierzu wurden in der Vergangenheit die als Trägermaterialien verwendeten Holzwerkstoffplatten meist mit einem Dekorpapier beschichtet, wobei der Vielfältigkeit an verschieden gemusterten Dekorpapieren keine Grenzen gesetzt waren bzw. sind.

Als Alternative zur Verwendung von Dekorpapieren auf Holzwerkstoffplatten hat sich in der Vergangenheit das direkte Bedrucken von Holzwerkstoffplatten als Trägermaterialien entwickelt, da ein Bedrucken von Papier und dessen nachträgliches Kaschieren oder Direktbeschichten auf die Holzwerkstoffplatte entfällt.

Die hierbei hauptsächlich zum Einsatz kommenden Drucktechniken sind das Tiefdruckverfahren und das Digitaldruckverfahren. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand wie z.B. ein Trägermaterial übertragen. Beim Digitaldruck hingegen wird das Druckbild direkt von einem Computer in eine Druckmaschine wie z.B. einem Laserdrucker oder Tintenstrahldrucker übertragen. Dabei entfällt die Verwendung einer statischen Druckform.

Im Rahmen der technischen Weiterentwicklung der Drucktechnologie von verschiedensten Trägermaterialien wird jedoch mehr und mehr auf den Digitaldruck gesetzt. Während digitale Druckverfahren zunächst vor allem in der graphischen Industrie wie z.B. Werbeagenturen, Werbemittelhersteller oder Druckereien Anwendung fanden, zeigt sich mittlerweile, dass digitale Druckverfahren auch häufiger in anderen Industriezweigen anzutreffen sind. Hierfür gibt es zwar vielfältige Gründe, wobei sich jedoch zwei wesentliche Argumente erkennen lassen. So ermöglicht der Digitaldruck die Herstellung eines Druckbildes mit einer besonders hohen Qualität durch eine höhere Auflösung und erlaubt des Weiteren ein breiteres Anwendungsspektrum bei hoher Flexibilität.

Digitales Drucken wird heute fast ausschließlich unter Verwendung des Farbsystems CMYK durchgeführt. Das CMYK Farbmodell ist ein subtraktives Farbmodell, wobei die Abkürzung CMYK für die drei Farbbestandteile Cyan, Magenta, Yellow (gelb) und den Schwarzanteil Key als Farbtiefe steht. Mit diesem Farbsystem lässt sich ein Farbraum (Gamut) abbilden, der vielen Anforderungen aus verschiedensten Bereichen genügt.

Trotzdem ist der CMYK Farbraum ein Kompromiss, der dazu führt, dass bestimmte Farben entweder gar nicht erzeugt werden können oder dazu dann doch der Einsatz zusätzlicher Farben nötig wird. Dieses Problem stellt sich besonders bei der Reproduktion von Holzdekoren in der Möbel- oder Laminatbodenindustrie, wobei verschiedene Brauntöne erzeugt werden müssen.

Die der Erfindung zugrunde liegende technische Aufgabe bestand daher darin, ein Verfahren zur Erzeugung von Dekordrucken auf verschiedenen Trägermaterialien mit gleicher Qualität bzw. vergleichbarer Qualitätsanmutung unter Vermeidung von Metamerie zur Verfügung zu stellen, wobei eine gute Reproduktion von warm anmutenden Holzdekoren auf allen Trägermaterialien gewährleistet wird.

Diese Aufgabe wird erfindungsgemäß durch ein Verfahren mit den Merkmalen des Anspruchs 1 gelöst.

Entsprechend wird ein Verfahren zur Herstellung von mindestens einem mit einem Druckdekor versehenen Trägermaterial bereitgestellt, wobei das Druckdekor mittels Digitaldruck z.B. in einem Tintenstrahldruckverfahren auf das mindestens eine Trägermaterial aufgetragen wird. Das Trägermaterial ist mindestens ein Rohpapier, mindestens ein imprägniertes Papier oder mindestens eine Werkstoffplatte.

Erfindungsgemäß ist die für den Digitaldruck verwendete Tinte eine wasserlösliche CRYK Tinte, die mindestens ein Cyanpigment, das rote Pigment PR207 , das gelbe Pigment PY181 und mindestens ein schwarzes Kohlenstoffpigment enthält.

Das Druckdekor ist erfindungsgemäß ein Holzdekor, das im Farbraum in Richtung orange-rot verschoben ist.

Das vorliegende Verfahren verwendet demnach eine Tinte, in der das üblicherweise in Tintenstrahltinten verwendete Magenta gegen ein rotes Farbpigment ausgetauscht ist. Mit dieser Tinte ist es nunmehr möglich, Dekore auf verschiedenen Trägermaterialien bereitzustellen, die im Farbraum in Richtung orange-rot verschoben sind.

Mit dem vorliegenden Verfahren ist es möglich, Dekorpapiere für Möbel, Bodenpaneele und Hochdrucklaminate und Laminatpaneele mit dem gleichen Dekor und der gleichen Farbwirkung, d.h. Möbel, Boden und Kanten in einem zueinander passenden Dekor und Farbstellung, bereitzustellen.

Insbesondere ist es aufgrund der Verwendung der modifizierten Tinte möglich, Metamerie-Effekte zu vermeiden. Metamerie bedeutet, dass Drucke wegen der Verwendung unterschiedlicher Farbpigmente unter verschiedenen Lichtarten mal farblich gleich, mal farblich unterschiedlich aussehen. Dies resultiert aus den unterschiedlichen Reflexions- bzw. Transmissionskurven der Pigmente. Die Verwendung eines CMYK-Tintensatzes vermeidet nunmehr diese Effekte für verschiedene Trägermaterialien, insbesondere können die gleichen Pigmente im Tiefdruckverfahren eingesetzt werden, so dass sowohl Digitaldruck als auch Tiefdruckverfahren unter Vermeidung von Metamerie angewendet werden können.

In der EP 2 865 529 B1 und in der EP 2865528 B1 wird die Verwendung einer CRYK-Tinte zum Bedrucken eines Papiersubstrates verwendet wird. Diese CRYK-Tinte enthält neben einem Cyanpigment und einem Russpigment das rote Pigment PR 254 und das gelbe Pigment PY151. EP 1935659 A1 beschreibt ebenfalls ein Druckverfahren unter Verwendung von spezifischen Tinten, wobei jedoch eine Vielzahl von möglichen Farbpigmenten aufgelistet wird. Es werden diverse Gelbpigmente und Rotpigmente benannt.

Das rote Pigment PR254 gehört zu der Klasse der Diketopyrrolopyrrol-Pigmente und wird mit einer gelblich-roten Farbe beschrieben. PR254 wird bevorzugt in Automobillacken verwendet. Das gelbe Pigment PY151 ist ein Benzimidazolonpigment.

Nachteilig bei der Verwendung von PR254 und PY151 in der Bereitstellung von Druckdekoren für verschiedene Trägermaterialien zur Anwendung in der Möbel- und Laminatbodenindustrie ist jedoch eine nur ungenügende Farbverschiebung in Richtung orange-rot sowie die vergleichsweise hohen Kosten dieser Pigmente.

Die erfindungsgemäße Verwendung des roten Pigmentes PR207 aus der Gruppe der Chinacridon-Pigmente ermöglicht hingegen die gewünschte Farbverschiebung bei gleichzeitig geringeren Kosten bei gleichzeitiger Vermeidung von Metamerie.

Wie erwähnt, basiert das im vorliegenden Verfahren zum Einsatz kommende rote Pigment auf einem Chinacridon-Pigment. Diese gehören zu einer Gruppe organischer Pigmente, die sich von der Grundstruktur des Chinacridons ableiten. Sie weisen eine sehr gute Wetterechtheit, hohe Farbstärke und hohe chemische Beständigkeit auf.

Weitere rote Pigment aus der Gruppe der Chinacridon-Pigmente sind2,9-Dimethylchinacridon (Pigment Red 122), 2,9-Dichlorchinacridon (Pigment Red 202), Mischkristall aus Chinacridon und 4, 11 - Dichlorchinacridon (Pigment Red 207) und 3,10-Dichlorchinacridon (Pigment red 209).

Das rote Pigment PR207 als Mischkristall aus Chinacridon und 4, 11 - Dichlorchinacridon wird erfindungsgemäß verwendet. Ein Mischkristall ist als eine feste Lösung zu verstehen, die sich von einer rein physikalische Mischung der Einzelkomponenten unterscheidet. In einer festen Lösung sind z.B. die Moleküle einer Komponente in das Kristallgitter der anderen Komponente eingebaut. PR207 wird mit einer gelblich-roten Farbe beschrieben.

Das in dem vorliegenden Verfahren verwendete gelbe Pigment PY181 ist - wie das PY151 - ein Benzimidazolonazopigment, weist jedoch andere Substituenten auf. So enthält PY181 als R4 Substituent eine Amidobenzol-Seitenkette, während PY151 an derselben Position lediglich ein Wasserstoff aufweist. PY181 weist eine gute Säure- und Basenstabilität sowie Lösemittelstabilität auf und ist gut dispergierbar.

In einer Ausführungsform der im vorliegenden Verfahren verwendeten Tinte ist das mindestens eine Cyanpigment ein Kupferphthalocyaninpigment, bevorzugt C.I. Pigment Blue 15:3 oder C.I. Pigment Blue 15:4, insbesondere bevorzugt C.I. Pigment Blue 15:3 ist.

In einer weiteren Ausführungsform der im vorliegenden Verfahren verwendeten Tinte ist das schwarze Kohlenstoffpigment ein Russpigment, insbesondere ausgewählt aus der Gruppe Regal™ 400R, Mogul™, L, Elftex™ 320 from Cabot Co., or Carbon Black FW18, Special Black™ 250, Special Black™ 350, Special Black™ 550, Printex™ 25, Printex™ 35, Printex™ 55, Printex™ 90, Printex™ 150T from DEGUSSA Co., MA8 from MITSUBISHI CHEMICAL Co., and C.I. Pigment Black 7 and C.I. Pigment Black 11.

Die Pigmentkonzentration in der vorliegend verwendeten Tinte, insbesondere in Bezug auf das rote und gelbe Pigment, liegt bei mehr als 2 Gew.-%, bevorzugt zwischen 2,2 und 6 Gew%, insbesondere bevorzugt zwischen 2,5 und 5 Gew%, bezogen auf das Gesamtgewicht der Tinte.

Wie bereits erwähnt handelt es sich bei der vorliegend verwendeten Tinte um eine wässrige Tinte. Der Wasseranteil in der Tinte liegt bei mindestens 50% liegt, bevorzugt bei über 50%, insbesondere bevorzugt bei mindestens 55% liegt. z.B. bei 51%, 52% oder 53%.

Die vorliegend verwendete Tinte weist ebenfalls einen Lösemittelanteil auf. So enthält die Tinte mindestens ein organisches Lösemittel mit einem Anteil von weniger als 45%, bevorzugt von weniger als 43%; z.B. 41%, 42%.

Das organische Lösemittel hält die Tinte, insbesondere in Kombination mit weiteren Additiven wie z.B. Dispergierhilfsmitteln, in einer verarbeitungsfähigen Konsistenz. Als organisches Lösemittel kann Glykol oder weitere Alkohole, wie Ethanol verwendet werden.

Darüber hinaus kann die vorliegend verwendete Tinte weitere Additive wie Biozide, Befeuchtungsmittel, Säure / Basen zur Einstellung des pH-Wertes, Tenside als oberflächenaktive Stoffe aufweisen. Als Befeuchtungsmittel können u.a. 2-Pyrrolidon, Glycerol und 1,2-Hexandiol in einer Menge zwischen 0,1 und 25 Gew-%, bezogen auf das Gesamtgewicht der wässrigen Tintenstrahltinte, enthalten sein.

Wie oben bereits erwähnt, können mit dem vorliegenden Verfahren verschiedene Trägermaterialien bedruckt werden.

So ist das mindestens eine zu bedruckende Trägermaterial in einer Ausführungsform mindestens ein Rohpapier. Unter Rohpapieren sind dabei solche Papiere zu verstehen, die weder einer Leimung in der Masse noch eine Imprägnierung der Oberfläche mit einem Harz oder Leim ausgesetzt waren. Rohpapiere bestehen im Wesentlichen aus Zellstoffen, Pigmenten und Füllstoffen und üblichen additiven. Zur Herstellung der von Rohpapieren wie zum Beispiel Dekorpapieren können Nadelholz-Zellstoffe, Laubholz-Zellstoffe, oder Mischungen beider Zellstoffarten verwendet werden. Zur Einfärbung der Rohpapier können anorganische Farbpigmente wie Metalloxide, Metall Hydroxide und Metalloxid Hydrate, Metall Sulfide, Metallsulfate, Metallchromate und Metallmolybdate sowie organische Farbpigmente und/oder Farbstoffe wie zum Beispiel Carbonylfarbmittel, Cyaninfarbmittel und andere eingesetzt werden.

In einer bevorzugten Ausführungsform ist das vorliegend zu bedruckende Rohpapier mindestens eine Papierbahn ohne Imprägnierung mit mindestens einer Tintenaufnahmeschicht. Bei der Tintenaufnahmeschicht handelt es sich bevorzugt um eine hydrophile Beschichtung, die wasserlösliche oder wasserdispergierbare Polymere bzw. Bindemittel sowie anorganische Pigmente enthält.

Als Bindemittel können beispielsweise Polyvinylalkohol, Polyvinylpyrrolidon, Polyvinylacetat, Stärke, Gelatine, Carboxymethylcellulose, Ethylen/Vinylacetat, Styrol/Acrylsäureester Copolymere oder deren Gemische verwendet werden.

Als anorganische Pigmente können in der tintenaufnehmenden Schicht anorganische weiße Pigmente wie Silikate, Kaolin, Kalziumkarbonat, Aluminiumhydroxid, Talkum, Titandioxid oder Farbpigmente wie Eisenoxid, Russ, oder organische Farbpigmente enthalten sein. Das Verhältnis von Pigment zu Bindemittel in der tintenaufnehmenden Schicht liegt zwischen 1:0,05-1:1 bezogen auf den Feststoffgehalt.

In einer bevorzugten Ausführungsform enthält die tintenaufnehmende Schicht Silikate, Aluminiumoxide, Aluminiumhydroxide oder Aluminiumsilikate und als wasserlösliches polymeres Bindemittel Polyvinylalkohol.

Das Flächengewicht der tintenaufnehmenden Schicht kann zwischen 0,5 - 20 g/m² betragen.

In einer weiteren Ausführungsform ist das mindestens eine zu bedruckende Trägermaterial mindestens ein vorbehandeltes, imprägniertes Papier. Unter einem vorbehandelten Papier (oder Zelluloselage) ist dabei ein Papier oder eine Papierbahn zu verstehen, die mit einer Harzlösung imprägniert ist. Das Papier kann mit verschiedensten Harzlösung getränkt sein, beispielsweise Melaminharze und Harnstoffharze, Kunststoff-Acrylat-Verbindungen oder Stärke-Beleimung. Es ist auch möglich, das Papier unter Verwendung von Harzpulver zu imprägnieren. Die Verwendung von Harzpulver ist weiter unten im Detail beschrieben.

In einer bevorzugten Ausführungsvariante wird ein imprägniertes Papier verwendet, welches mit den folgenden Verfahrensschritten (siehe auch EP 2 980 313 A1) bereitgestellt wird: a) vollständiges Tränken der Zelluloselage mit einem härtbaren Harz, z.B. Melamin-Formaldehydharz), b) Entfernen des sich auf der Oberfläche ausbildenden überschüssigen Harzes (z.B. durch Abziehen oder Abrakeln), c) Trocknen der getränkten Zelluloselage derart, dass nach dem Verdunsten des Wassers aus dem Harz die Zellulosefaser auf der Oberfläche, von der das Harz entfernt wurde zumindest teilweise freiliegen.

Durch das Abziehen oder Abrakeln schließt das auf der Oberfläche der Zelluloselage verbleibende Harz mit den Faserspitzen ab. Im Trocknungsprozess zieht sich das Harz in die Fasern zurück, so dass die Fasern mit dem Harz getränkt sind aber nicht vom Harz eingeschlossen. Eine derartige Oberfläche ist zum Bedrucken mit wässrigen Digitaldrucktinten geeignet.

Die für das Abziehen bzw. Abrakeln verwendete Spezialeinrichtung funktioniert ähnlich wie eine Spachtelmaschine bei der eine oder mehrere Walzen auf dem Papier rückwärts laufen und das überschüssige Harz aufnehmen. Durch unterschiedliche Geschwindigkeiten der Walzen kann die Menge genau gesteuert und eine Wiederholbarkeit gewährleistet werden.

Zur Verbesserung des Druckergebnisses kann das behandelte Papier (Rohpapier ohne oder mit Tintenaufnahmeschicht, imprägniertes Papier) zusätzlich mit einem Primermaterial versehen sein.

Als Primermaterial kann eine wasserbasierende Kunstharz-oder Acrylatharz-Dispersion verwendet werden, die vollständig mit Wasser mischbar oder in Wasser teilweise lösbar ist. Das Primermaterial sollte einen niedrigen Lösungsmittelgehalt von unter 3 % aufweisen.

Wie oben bereits angedeutet, wird das Druckdekor im Direktdruck mittels eines Digitaldruckverfahrens unter Verwendung der oben beschriebenen CRYK-Tinte auf das Trägermaterial aufgebracht. Beim Digitaldruck wird das Druckbild direkt von einem Computer in eine Druckmaschine, wie z.B. einen Tintenstrahldrucker übertragen. Die Dekordaten werden von einer Software in Maschinendaten übersetzt (z.B. RIP-Software vom Hersteller Colorgate).

Die bedruckten Papiere (Rohpapier oder imprägniertes Papier) können nach dem Bedrucken mit einer Harzschicht als Schutzschicht versehen werden. Diese Schutzschicht kann aus einem noch nicht vollständig ausgehärteten Harz, bevorzugt ein Formaldehyd-haltiges Harz, insbesondere bevorzugt Melamin-Formaldehyd-Harz, Harnstoff-Formaldehyd-Harz und/oder Melamin-Harnstoff-Formaldehyd-Harz, oder einem strahlenhärtbaren Acrylat, bevorzugt Polyesteracrylate, Polyetheracrylate, Urethanacrylat, Hexandioldiacrylat oder Gemische davon, bestehen. Diese Schutzschicht dient dem Schutz der Druckdekors und ermöglicht eine Zwischenlagerung.

Wie erwähnt sollte die aufgetragene Schutzschicht noch nicht vollständig ausgehärtet sein, was insbesondere durch den Trocknungsprozess gesteuert wird.

Insbesondere müssen unabhängig vom Verwendungszweck alle imprägnierten Papiere einen Restfeuchtgehalt besitzen. Dieser ermöglicht unabhängig von der Art der Weiterverarbeitung (Kurztakt-, Conti- oder Mehretagenpresse) das Entstehen von qualitativ einwandfreien Produkten. Die Restfeuchte ist ein Indiz für den Vernetzungsgrad der eingesetzten Kunstharze.

Die zur Imprägnierung von Papierlagen (oder auch zur Direktbeschichtung von anderen Trägerplatten, siehe weiter unten) verwendeten Harze durchlaufen in diesen Prozessen verschiedene Polymerations- und Vernetzungszustände.

Dies sei im Folgenden anhand des häufig in der Holzwerkstoffplatten-Herstellung zum Einsatz kommenden Melamin-Formaldehyd-Harzes dargestellt.

Melamin und Formaldehyd reagieren zunächst unter Ausbildung von Methylolgruppen an den Aminogruppen des Melamins zu wasserlöslichen Produkten (siehe Schema I).

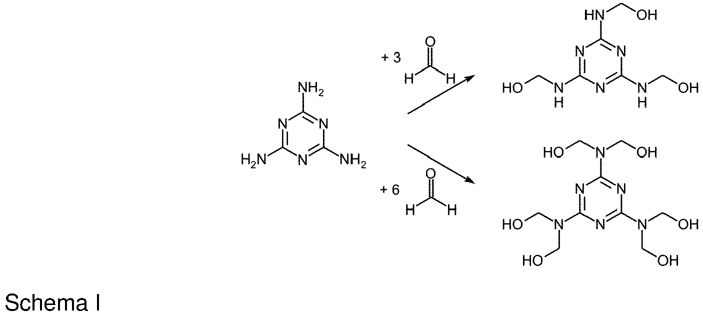

Diese Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

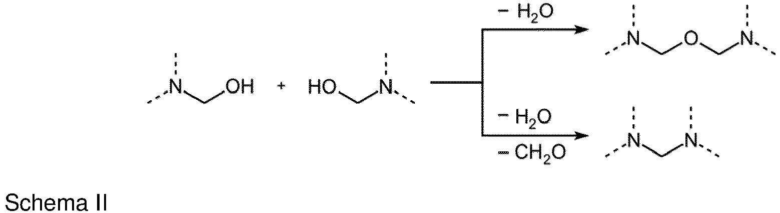

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

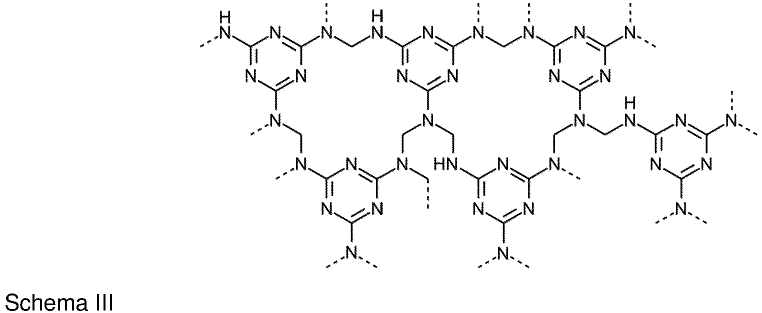

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Im Falle der Verwendung von imprägnierten Papierlagen zur Veredlung von Holzwerkstoffplatten z.B. zu hochwertigeren Fußbodenpaneelen ist es wünschenswert, dass das Imprägnierharz noch nicht vollständig ausgehärtet ist, sondern sich bevorzugt noch im teilvernetzten B-Zustand befindet. Dies ermöglicht bei der Weiterverarbeitung in der Presse noch ein Fließen/Verfilmen in Kombination mit der Weitervernetzung der Kunstharze. Entsprechend werden die vorliegend imprägnierten und bedruckten Papiere bevorzugt bis zum Zusatnd B getrocknet.

Das bedruckte und ggfs. beschichtete bzw. imprägnierte Papier kann anschließend mit einer Werkstoffplatte, mindestens einem Schutzpapier (Overlay) und ggfs. einem Gegenzugpapier verpresst werden.

In einer weiteren Ausführungsform ist das mindestens eine zu bedruckende Trägermaterial mindestens eine Werkstoffplatte, insbesondere eine Holzwerkstoffplatte, wie MDF- und HDF-Platten aus Holzfasern, Spanplatten aus Spänen, OSB aus Holzstrands, wobei die Holzfasern, Holzspäne und Holzstrands jeweils mit geeigneten Klebstoffen vermischt und heiß verpresst werden), WPC-Platten, Kunststoffplatte, z.B. SPC (stone plastic composite) oder eine Zementfaserplatte ist. Zum Direktdruck geeignet sind z.B. Trägermaterialien wie Holzwerkstoffe, Holzwerkstoff-Kunststoff-Gemische, WPC, Kunststoffe oder Gemische verschiedener Kunststoffe, beispielsweise PE, PP, PVC, PU, alle auch mit Füllstoffen, wie Kreide, Talkum oder auch Fasern.

In einer Ausführungsvariante kann die Oberfläche der Werkstoffplatte vor dem Bedrucken zur Verbesserung der Haftung der nachfolgenden Schichten vorbehandelt werden. Dies kann eine Reinigung mit Bürsten, ein Anschliff, der die Oberfläche auch von Unebenheiten befreit, und/oder eine Plasma- oder Coronabehandlung sein.

In einer Ausführungsform kann auch eine ungeschliffene Holzwerkstoffplatte, insbesondere MDF oder HDF, verwendet werden, die auf der Oberseite noch mit einer Presshaut (Verrottungsschicht) versehen ist. Es wird wässriges Melaminharz auf die Oberseite aufgebracht, um die Presshaut zu füllen. Das Melaminharz wird später in der Kurztaktpresse aufgeschmolzen und wirkt damit vergütend im Bereich dieser Schicht; d.h. es wirkt einer Delaminierung entgegen.

In einer bevorzugten Ausführungsform wird in einem nächsten Schritt mindestens eine Grundierung zur Erhöhung der Deckkraft aufgetragen.

Die Grundierung umfasst bevorzugt Kasein, Maisstärke oder Sojaprotein und kann anorganische Farbpigmente enthalten und somit als Grundierungsschicht für die anschließend aufzudruckende Dekorschicht dienen.

Als Farbpigmente können wiederum weiße Pigmente wie Titandioxid TiO₂ verwendet werden. Weitere Farbpigmente können Calciumcarbonat, Bariumsulfat oder Bariumcarbonat, aber auch Eisenoxidpigmente (für eine bräunliche Grundierung) sein. Die Grundierung kann neben den Farbpigmenten und dem Kasein, der Maisstärke oder Sojaprotein noch Wasser als Lösemittel enthalten.

Die Menge der aufgetragenen flüssigen Grundierung kann zwischen 10 und 50 g/m², bevorzugt zwischen 15 und 30 g/m², insbesondere bevorzugt zwischen 20 und 25 g/m² liegen.

Es ist ebenfalls denkbar, dass die Grundierung aus mindestens einer, bevorzugt aus mindestens zwei oder mehreren nacheinander aufgetragenen Lagen bzw. Aufträgen besteht (z.B. bis zu fünf Aufträgen), wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze auf die Werkstoffträgerplatte mit anschließender Trocknung aufgebracht werden. Es ist auch möglich, die Grundierung mittels Digitaldruck auf die Werkstoffplatte aufzubringen. Hierbei werden bevorzugt wasserbasierte mit weißen Farbpigmenten angereicherte Tinten verwendet, die passend zu den nachfolgend verwendeten Digitaldrucktinten sind. Ein Auftrag mittels Digitaldruck ist vorteilhaft, da die Druckanlage deutlich kürzer ist als eine Walzvorrichtung und somit Platz, Energie und Kosten spart.

In einer weiteren Ausführungsvariante des vorliegenden Verfahrens wird auf die Grundierung eine Primerschicht, bevorzugt als Einmalauftrag mit anschließender Trocknung, aufgebracht. Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Im Anschluss an das Bedrucken der grundierten Werkstoffplatte im Digitaldruck unter Verwendung der oben beschriebenen CRYK Tinte kann die Dekorschicht ebenfalls (wie bereits oben für die Papiere beschrieben) mit einer Schutzschicht versehen werden.

Diese Schutzschicht kann ein Formaldehyd-haltiges Harz (im B-Zustand, siehe oben), insbesondere ein Melamin-Formaldehyd-Harz, Harnstoff-Formaldehyd-Harz oder Melamin-Harnstoff-Formaldehyd-Harz sein und Glaskugeln (Größe 50-150 µm) als Abstandshalter für eine optionale Zwischenlagerung der Platten enthalten. Diese Schutzschicht dient einem vorläufigen Schutz der Dekorschicht zur Lagerung vor der weiteren Veredelung. Die Schutzschicht auf der Dekorschicht ist noch nicht vollständig ausgehärtet, sondern mit einer gewissen Restfeuchte von ca. 10%, bevorzugt von ca. 6%, versehen und noch weiter vernetzbar. Im Falle einer Zwischenlagerung verharrt das Harz somit im Zustand B (noch nicht vollständig ausgehärtet und vernetzt), wobei das Dekor geschützt wird. Die Glaskugeln können dem Harz beigegeben oder aufgestreut werden und fungieren als Abstandhalter. Derartige Schutzschichten sind z.B. in der WO 2010/112125 A1 oder EP 2 774 770 B1 beschrieben.

Alternativ dazu geht es direkt zum nächsten Bearbeitungsschritt.

In einer weitergehenden Ausführungsvariante wird auf die die bedruckte Werkstoffplatte (mit oder ohne Schutzschicht) mindestens eine Verschleißschutzschicht aufgetragen.

Diese Verschleißschutzschicht kann aus einer oder mehreren Lagen, z.B. drei, vier, fünf oder sechs Lagen bestehen.

In einer Ausführungsform wird eine Verschleißschutzschicht mit den folgenden Schritten aufgetragen:
- Auftragen von mindestens einer ersten Harzschicht auf die mindestens eine Dekorschicht auf der Oberseite der Werkstoffplatte, wobei die erste Harzschicht einen Feststoffgehalt zwischen 60 und 80 Gew%, bevorzugt 65 und 70 Gew%, insbesondere bevorzugt zwischen 65 und 67 Gew% aufweist;
- gleichmäßiges Aufstreuen von abriebfesten Partikeln auf die erste Harzschicht auf der Oberseite der Werkstoffplatte;
- wobei die mit den abriebfesten Partikeln versehene erste Harzschicht auf der Oberseite der Werkstoffplatte ggfs. nach dem Auftrag nicht getrocknet wird,
- Auftragen von mindestens einer zweiten Harzschicht auf die mit den abriebfesten Partikeln versehene erste, ggfs. feuchte Harzschicht auf der Oberseite der Werkstoffplatte, wobei die zweite Harzschicht einen Feststoffgehalt zwischen 60 und 80 Gew%, bevorzugt 65 und 70 Gew%, insbesondere bevorzugt zwischen 65 und 67 Gew% aufweist;
- anschließendes Trocknen des Aufbaus aus erster Harzschicht und zweiter Harzschicht in mindestens einer Trocknungsvorrichtung;
- Auftragen von mindestens einer dritten Harzschicht, wobei die dritte Harzschicht einen Feststoffgehalt zwischen 60 und 80 Gew%, bevorzugt 65 und 70 Gew%, insbesondere bevorzugt zwischen 65 und 67 Gew% aufweist und Glaskugeln enthält;
- anschließendes Trocknen der aufgetragenen dritten Harzschicht in mindestens einer weiteren Trocknungsvorrichtung;
- Auftragen von mindestens einer vierten Harzschicht, wobei die vierte Harzschicht einen Feststoffgehalt zwischen 50 und 70 Gew%, bevorzugt 55 und 65 Gew%, insbesondere bevorzugt zwischen 58 und 62 Gew% aufweist und Glaskugeln enthält;
- anschließendes Trocknen der aufgetragenen vierten Harzschicht in mindestens einer weiteren Trocknungsvorrichtung;
- Auftragen von mindestens einer fünften Harzschicht, wobei die fünfte Harzschicht einen Feststoffgehalt zwischen 50 und 70 Gew%, bevorzugt 55 und 65 Gew%, insbesondere bevorzugt zwischen 58 und 62 Gew% aufweist und Glaskugeln enthält;
- anschließendes Trocknen der aufgetragenen fünften Harzschicht in mindestens einer weiteren Trocknungsvorrichtung;
- Auftragen von mindestens einer sechsten Harzschicht, wobei die sechste Harzschicht einen Feststoffgehalt zwischen 50 und 70 Gew%, bevorzugt 55 und 65 Gew%, insbesondere bevorzugt zwischen 58 und 62 Gew% aufweist und keine Glaskugeln enthält;
- anschließendes Trocknen der aufgetragenen sechsten Harzschicht in mindestens einer weiteren Trocknungsvorrichtung; und
- Verpressen des Schichtaufbaus in einer Kurztaktpresse.

Die für die Verschleißschutzschicht verwendeten Harzschichten basieren bevorzugt auf wässrigen Formaldehyd-haltigen Harzen, insbesondere Melamin-Formaldehyd-Harz, Harnstoff-Formaldehyd-Harz oder Melamin-Harnstoff-Formaldehyd-Harz.

Die verwendeten Harze enthalten bevorzugt jeweils Additive, wie Härter, Netzmittel (Tenside oder Mischungen davon), Entschäumer, Trennmittel und/oder weitere Komponenten. Das Netzmittel wird in den Harzschichten jeweils in einer Menge von 0,1-1 Gew% eingesetzt. Trennmittel und Glättmittel werden bevorzugt der fünften und sechsten Harzschicht in Mengen zwischen 0,5-1,5 Gew% zugegeben.

Als Härter wird bevorzugt ein latenter Härter verwendet, wie Alkanolaminsalze von Säuren, z.B. ein Alkanolaminsalz einer Sulfonsäure (siehe DeuroCure des Herstellers Deurowood). Die Zugabe des latenten Härters zum Harz erfolgt bevorzugt unmittelbar vor dem Auftragswerk, um eine vorzeitige Härtung des Harzes und somit Verluste zu vermeiden. Entsprechend erfolgt bevorzugt keine zentrale Zumischung des Härters, sondern eine Zumischung der variablen Härtermenge erst an den korrespondierenden Auftragswerken. Dies hat den Vorteil, dass bei Störung der Anlage das Harz ohne den Härter länger in den Leitungen verbleiben kann. Nur die Auftragswerke mit Harz-Härter müssen gezielt auf die Topfzeit des Systems eingestellt werden. Damit lassen sich Verluste durch bei Stillstand/Störung notwendiges Abpumpen von Harz-Härter deutlich reduzieren.

Der Anteil des Härters in den einzelnen Harzschichten variiert und kann zwischen 0,5 bis 1,5 Gew%, bevorzugt 0,7 bis 1,3 Gew% betragen. Besonders bevorzugt ist, dass der Anteil an Härter je Harzauftrag in Fertigungsrichtung abnimmt; d.h. in den unteren Harzschichten ist der Härteranteil größer als in den oberen Harzschichten. Durch die Verringerung der Härtermenge von den unteren zu den oberen Harzschichten lässt sich ein gleichmäßiges Aushärten der einzelnen Harzschichten in der KT-Presse realisieren.

Die erste Harzschicht wird in einer Variante des Verfahrens in einer Menge zwischen 10-100 g/m², bevorzugt 40-80 g/m², insbesondere bevorzugt 45-60 g/m² aufgetragen. Der Auftrag der ersten Harzschicht erfolgt z.B. mit einer rillierten Auftragswalze in einem ersten Auftragswerk.

Die erste Harzschicht kann Zellulosefasern oder Holzfasern, bevorzugt Zellulosefasern, enthalten. Durch die Zugabe von Zellulosefasern kann die Viskosität des aufzutragenden Harzes eingestellt werden und der Auftrag der ersten Deckschicht auf die Holzwerkstoffplatte erhöht werden. Die Menge an Zellulosefasern, die mit der ersten Harzschicht aufgetragen wird, kann zwischen 0,1 und 1 Gew%, bevorzugt zwischen 0,5 und 0,8 Gew% (bezogen auf die aufzutragende Harzmenge) bzw. zwischen 0,1-0,5 g/m², bevorzugt 0,2-0,4 g/m², insbesondere bevorzugt 0,25 g/m² liegen. Die bevorzugt verwendeten Zellulosefasern weisen eine weiße Farbe auf und liegen in Form eines feinen oder granulären, leicht hygroskopischen Pulvers vor.

In einer weiteren Ausführungsform des vorliegenden Verfahrens werden als abriebfeste Partikel, Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klasse F200 verwendet, wobei F200 eine Mischung zwischen F180 und F220 ist und einen Durchmesser zwischen 53 und 75 µm aufweist.

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane.

In einer weiteren Ausführungsform des vorliegenden Verfahrens wird die zweite auf die Oberseite der Werkstoffplatte aufzutragende Harzschicht in einer Menge zwischen 10-50 g/m², bevorzugt 20-30 g/m², insbesondere bevorzugt 20-25 g/m² aufgetragen. Insgesamt ist die Menge der zweiten Harzschicht geringer als die Menge der ersten Harzschicht. In einer bevorzugten Ausführungsform enthält die zweite auf die Oberseite der Werkstoffplatte aufzutragende Harzschicht keine Glaskugeln.

Die Gesamtmenge an erster und zweiter Harzschicht liegt zwischen 50-100 g/m², bevorzugt 60-80 g/m², insbesondere bevorzugt bei 70 g/m². So beträgt in einer Variante die Menge der ersten Harzschicht 50 g/m² und die Menge des zweiten Harzschicht 25 g/m².

Es kommt zu einer Anreicherung der abriebfesten Partikel in der zweiten Harzschicht durch Mitnahme von losen Partikeln durch das zweite Auftragswerk. So kann sich in dem als zweite Harzschicht aufzutragenden Harz ein Gehalt an abriebfesten Partikeln von 5 bis 15 Gew%, bevorzugt 10 Gew% einstellen.

Wie oben ausgeführt, werden Folgend auf die zweite Harzschicht weitere Harzschichten, eine dritte, vierte, fünfte und sechste Harzschicht, aufgetragen und jeweils nach dem Auftrag getrocknet.

Die Menge der auf die Oberseite der Holzwerkstoffplatte aufgetragenen dritten Harzschicht kann zwischen 10-50 g/m², bevorzugt 20-30 g/m², insbesondere bevorzugt 25 g/m² betragen.

Wie oben ausgeführt, enthält die dritte Harzschicht Glaskugeln, die als Abstandshalter fungieren. Die bevorzugt verwendeten Glaskugeln weisen einen Durchmesser von 90-150 µm auf. Die Glaskugeln können zusammen mit der dritten Harzschicht aufgebracht werden oder separat auf die dritte Harzschicht aufgestreut werden. Die Menge an Glaskugeln beträgt 10 bis 50 g/m², bevorzugt 10 bis 30 g/m², insbesondere bevorzugt 15 bis 25 g/m². Der Ansatz besteht bevorzugt aus ca. 40 kg Harz flüssig plus Glaskugeln und Hilfsstoffe. Die Glasperlen können ebenfalls in silanisierter Form vorliegen. Durch die Silanisierung der Glasperlen wird die Einbettung der Glasperlen in die Harzmatrix verbessert.

Die Menge der auf die Oberseite der Holzwerkstoffplatte aufgetragenen vierten Harzschicht (die ebenfalls Glaskugeln enthält) kann zwischen 10-40 g/m², bevorzugt 15-30 g/m², insbesondere bevorzugt 20 g/m² betragen.

Wie oben ausgeführt, ist der Feststoffgehalt der vierten Harzschicht (wie auch der fünften und sechsten Harzschicht) im Vergleich zu der ersten bis dritten Harzschicht geringer. Der variierende Feststoffgehalt der aufzutragenden Harzschichten ermöglicht zum einen eine höhere Gesamtschichtdicke aufgrund des erhöhten Feststoffgehaltes in der ersten bis dritten Schicht, zum anderen wird durch den reduzierten Feststoffgehalt in der vierten bis sechsten Harzschicht sichergestellt, dass die Trocknungs- und Presszeit ausreichend für den Gesamtaufbau ist.

Die Menge der auf die Oberseite der Holzwerkstoffplatte aufgetragenen fünften Harzschicht kann zwischen 10-40 g/m², bevorzugt 15-30 g/m² betragen. Wie oben ausgeführt, enthält die fünfte Harzschicht ebenfalls Glaskugeln. Die Glaskugeln können zusammen mit der dritten Harzschicht aufgebracht werden oder separat auf die dritte Harzschicht aufgestreut werden. Die Glaskugeln werden in einer Menge von 8 bis 10 kg pro Auftragswerk aufgebracht.

Die nach Trocknung auf die fünfte Harzschicht aufzutragende sechste Harzschicht enthält hingegen keine Glaskugeln. Das Weglassen von Glaskugeln in der sechsten Harzschicht stellt sicher, dass die unterhalb liegenden Harzschichten, die bereits getrocknet sind, nicht zerstört werden und die Oberfläche des Harzaufbaus nicht zerrissen wirkt.

Die Gesamtschichtdicke der aufgetragenen Harzschichten auf der Holzwerkstoffplatte kann zwischen 60 und 200 µm, bevorzugt zwischen 90 und 150 µm, insbesondere bevorzugt zwischen 100 und 120 µm. Die Gesamtschichtdicke liegt somit deutlich über den bisherigen Verfahren, mit denen typischerweise Schichtdicken von bis zu 50 µm erreicht werden.

In einer weiteren Ausführungsform wird jeweils eine Harzschicht auf die Unterseite der Werkstoffplatte zusammen mit der auf die Oberseite der Werkstoffplatte aufzutragenden zweiten, dritten, vierten, fünften und sechsten Harzschicht aufgetragen.

So wird in einer Ausführungsform parallel zur zweiten Harzschicht auf der Oberseite der Werkstoffplatte auch eine Harzschicht auf die Unterseite der Werkstoffplatte aufgetragen. Die Menge der auf die Unterseite der Werkstoffplatte aufgetragenen Harzschicht kann zwischen 50-100 g/m², bevorzugt 60-80 g/m², insbesondere bevorzugt 60 g/m² betragen. Bevorzugt ist die untere Harzschicht (z.B. bräunlich) eingefärbt, um einen Gegenzug zu simulieren. Die zweite Harzschicht wird bevorzugt parallel bzw. gleichzeitig auf die Oberseite und Unterseite der Werkstoffplatte in mindestens einer Doppelauftragsvorrichtung (Walzenauftragsaggregat) aufgetragen. Nach Auftrag der zweiten Harzschicht erfolgt eine Trocknung (Lufttrocknung) des Aufbaus aus erster und zweiter Harzschicht in einer ersten Trocknungsvorrichtung.

In der gleichen Weise werden jeweils eine dritte, vierte, fünfte und sechste Harzschicht auf die Unterseite parallel zur Oberseite in Doppelauftragswerken auf die Trägerplatte aufgetragen und jeweils im Anschluss an den Auftrag getrocknet.

Die auf der Unterseite aufgetragene(n) Harzschicht(en) wirken als Gegenzug. Durch das Aufbringen der Harzschichten auf die Oberseite und Unterseite der Werkstoffplatten in ungefähr den gleichen Mengen wird gewährleistet, dass die durch die aufgebrachten Schichten beim Verpressen entstehenden Zugkräfte auf die Werkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge jedoch ohne die Zugabe von Glaskugeln.

Die Trocknung der Harzschichten erfolgt bei Trockner-Temperaturen zwischen 150 und 220°C, bevorzugt zwischen 180 und 210°C, insbesondere in einem Konvektionstrockner. Die Temperatur wird an die jeweiligen Harzschichten angepasst und kann in den einzelnen Konvektionstrocknern variieren; z.B. kann die Temperatur im zweiten, dritten und vierten Konvektionstrockner bei 205°C und im fünften und sechsten Konvektionstrockner jeweils bei 198°C liegen. Anstatt von Konvektionstrocknern können aber auch andere Trockner zum Einsatz kommen.

In dem sich an den letzten Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt zwischen 180 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 5 bis 15 sec, bevorzugt zwischen 7 bis 10 sec. Im Vergleich dazu: bei Dekorpapieren wird ein Druck von 50-60 kg/cm² für 16 sec angelegt.

Bevorzugt wird die beschichtete Werkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird. Dies ermöglicht die Herstellung einer dekorsynchronen Struktur. Während des Verpressens kommt es zu einer Aufschmelzung der Melaminharzschichten und Ausbildung eines Laminats durch Kondensationsreaktion unter Einschluss der Bestandteile Korund/Glas/Fasern.

In einer anderen Ausführungsform wird die Werkstoffplatte mit den folgenden Verfahrensschritten bearbeitet:
a) Aufbringen von mindestens einer ersten Schicht aus mindestens einem pulverförmigen Harz auf mindestens eine Seite einer Holzwerkstoffplatte und Anschmelzen der mindestens einen aufgebrachten Schicht aus einem pulverförmigen Harz;
   a1) optionales Aufbringen von mindestens einer Grundierungsschicht, die Farbpigmente, insbesondere weiße Farbpigmente enthalten kann;
   a2) optionales Aufbringen von mindestens einer Primerschicht;
b) Aufbringen von mindestens eines Druckdekors oder Dekorschicht mittels Digitaldruck unter Verwendung der oben beschriebenen CRYK Tinte; und
c) Aufbringen von mindestens einer weiteren (zweiten) Schicht aus mindestens einem pulverförmigen Harz auf die mindestens eine aufgedruckte Dekorschicht und Anschmelzen der mindestens einen auf die Dekorschicht aufgestreuten Schicht aus pulverförmigen Harz.

In einer Ausführungsform des vorliegenden Verfahrens wird das pulverförmige Harz in einer Menge von 10 bis 50 g/m², bevorzugt 15 bis 30 g/m², insbesondere bevorzugt 20 bis 25 g/m² auf die Holzwerkstoffplatte aufgetragen wird. Diese Auftragsmenge an Harzpulver gilt im Wesentlichen für alle aufzutragenden Harzpulverschichten, wobei diese jeweils angepasst werden können. Die Streudichte ist dabei so gewählt, dass in jedem Fall deckende Schichten erzeugt werden.

Die Teilchengröße des pulverförmigen Harzes liegt zwischen 20 bis 100 µm, bevorzugt zwischen 40 und 89 µm.

In einer weiteren Ausführungsform des vorliegenden Verfahrens ist das aufzutragende pulverförmige Harz ein Formaldehydharz, bevorzugt ein Harnstoffharz, ein Melaminharz oder ein Phenolharz, insbesondere bevorzugt ein Melamin-Formaldehyd-Harz. Es ist bevorzugt, wenn für die erste Harzschicht ein Melaminharz oder eine Harnstoffharz verwendet wird. In den oberen Schichten wird bevorzugt nur Melaminharz eingesetzt.

"Anschmelzen" oder "Angelieren" im Sinne der vorliegenden Anmeldung bedeutet, dass die Harzschicht noch nicht vollständig polymerisiert ist, sondern vielmehr wird die Polymerisation auf einer Zwischenstufe gestoppt, in welcher eine weitergehende Vernetzung bzw. Polymerisation zu einem späteren Verarbeitungszeitpunkt noch möglich ist. Der Sinn eines "Angelierens" liegt somit üblicherweise darin begründet, dass man zu einem späteren Zeitpunkt weitere Funktionsschichten auf die bereits aufgetragene Schutzschicht aufbringen oder das Produkt erst in weiteren Verarbeitungsschritten fertigstellen möchte.

Dem Melaminharz-Pulver können auch weitere Substanzen zugegeben werden. Besonders vorteilhaft ist dabei, dass auch wegen z. B. Aussalz-, Andick-, Absetz-, aushärtungsbeeinflussende Effekten usw. schlecht mit flüssigem Melaminharz verträgliche Substanzen verwendet werden können. Dabei kann es sich um Salze zur Erhöhung der Leitfähigkeit, organische oder anorganische Flammschutzmittel, Cellulosederivate, Radikalfänger, Pigmente, UV-Absorber usw.

Entsprechend kann das verwendete pulverförmige Harz Zuschlagstoffe, wie Pigmente, leitfähige Substanzen und Zellulose enthalten.

Bei Zugabe von Farbpigmenten kann die Schicht aus dem angeschmolzenen Harzpulver gleichzeitig als weiße Grundierungsschicht für die anschließend aufzudruckende Dekorschicht dienen. Als Farbpigmente können weiße Pigmente wie Titandioxid TiO₂ verwendet werden. Weitere Farbpigmente können Calciumcarbonat, Bariumsulfat oder Bariumcarbonat sein. Der Anteil der Farbpigmente kann bis zu 50 Gew% an der Gesamtpulvermenge betragen.

Die Zugabe von Farbpigmenten zu der ersten Schicht aus Harzpulver erhöht die Deckkraft, so dass diese als (alleinige) Grundlage bzw. Grundierung für die anschließende Dekorschicht einsetzbar sein kann.

In einer bevorzugten Ausführungsform wird das Harzpulver mittels elektrostatischer Aufladung aufgetragen. Der Auftrag kann auch mittels Pulverbeschichtung nach dem Triboverfahren erfolgen. Hierbei erfolgt eine Reibungsaufladung des aufzutragenden Pulvers.

Das Anschmelzen der aufgebrachten Schicht aus pulverförmige Harz kann unter Verwendung eines IR-Strahlers, oder auch Mikrowellensysteme oder ähnliches erfolgen. Die Verwendung von IR-Strahlern ist besonders bevorzugt.

Die in Schritt c) des vorliegenden Verfahrens aufgetragene und angeschmolzene weitere Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

In einer weitergehenden Ausführungsform werden auf die Dekorschicht oder die in Schritt c) aufgebrachte Harzpulverschicht abriebfeste Partikel gleichmäßig aufgestreut (Schritt d).

In einer weitergehenden Ausführungsform des vorliegenden Verfahrens wird mindestens eine dritte Schicht aus mindestens einem pulverförmigen Harz (Schritt e), insbesondere auf die Schicht aus abriebfesten Partikeln, aufgebracht. Diese Schicht dient als Trennschicht zur Absperrung der abriebfesten Partikel.

Die in diesen Schritt e) aufgetragene und angeschmolzene Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

In einer weitergehenden Ausführungsform des vorliegenden Verfahrens werden, insbesondere auf die mindestens eine dritte angeschmolzene Harzpulverschicht, Glaskugeln aufgestreut (Schritt f). Die Glaskugeln dienen als Abstandshalter zwischen abriebfesten Partikeln und nachfolgenden Pressblech fungieren. Damit kann der Blechverschleiß zumindest teilweise reduziert werden.

In einer weitergehenden Ausführungsform des vorliegenden Verfahrens wird mindestens eine vierte Schicht aus mindestens einem pulverförmigen Harz, insbesondere auf die Schicht aus Glaskugeln, aufgebracht (Schritt g). Diese Schicht dient zur Absperrung der Glaskugeln und als Abschlussschicht.

Die in diesen Schritt g) aufgetragene und angeschmolzene vierte Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

In einer weiteren Ausführungsform des vorliegenden Verfahrens wird der Schichtaufbau in einer Kurztaktpresse (KT-Presse) verpresst (Schritt h). Der Pressschritt erfolgt unter Druck- und Temperatureinfluss bei Temperaturen zwischen 180 und 250°C, bevorzugt zwischen 200 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 8 und 30 sec, bevorzugt zwischen 10 und 25 sec.

Die vorliegende Erfindung wird im Folgenden anhand von Ausführungsbeispielen näher erläutert.

### Ausführungsbeispiel 1a: Bedrucken von Rohpapier

Ein Rohpapier (Papiergewicht: 80 g/m²) wird von einer Abrollvorrichtung abgerollt.

Aufbringen einer Dekorschicht im Digitaldruckverfahren unter Verwendung einer CRYK-Tinte mit der Zusammensetzung: PB15:3 2.0 Gew%, PR207 2.0 Gew%, PY181 2.0 Gew%, PBL7 2.0 Gew%; Glykol 41%, Wasser 51%; Dichte 1,07 g/cm³; VOC 29%, 305 g/l; Flammpunkt > 100°C.

Die Druckfarben werden in einer Menge zwischen 5 und 10 g/m² aufgebracht.

Das bedruckte Papier kann nach dem Bedrucken mit einer Melamin-Formaldehyd-Harzschicht als Schutzschicht versehen werden. Diese Schutzschicht dient dem Schutz der Druckdekors und ermöglicht eine Zwischenlagerung.

Das Papier wird anschließend in einen Konvektionstrockner oder durch NIR (Nahinfrarot) auf eine Feuchte von ca. 6 Gew% getrocknet, so dass sich die Harzschicht im B-Zustand befindet.

### Ausführungsbeispiel 1b: Bedrucken von Rohpapier mit Tintenaufnahmeschicht

Ein Rohpapier (Papiergewicht: 80 g/m²) wird von einer Abrollvorrichtung abgerollt. Anschließend wird eine pigmentierte (TiO₂) Tintenaufnahmeschicht (synthetisches Silikat mit Polyvinylalkohol als Bindemittel) (Schichtdicke 40 µm; nach Trocknen bei 125°C trockenes Flächengewicht 4g/m²) und eine Primerschicht aufgetragen und der Schichtaufbau getrocknet.

Nach dem Trocknen wird auf das so erhaltene Papier (Papiergewicht: 80 g/m²) eine Dekorschicht im Digitaldruckverfahren unter Verwendung einer CRYK-Tinte mit der obigen Zusammensetzung aufgebracht. Die Druckfarben werden in einer Menge zwischen 5 und 10 g/m² aufgebracht.

Das bedruckte Papier kann nach dem Bedrucken mit einer Melamin-Formaldehyd-Harzschicht als Schutzschicht versehen werden. Diese Schutzschicht dient dem Schutz der Druckdekors und ermöglicht eine Zwischenlagerung.

Das Papier wird anschließend in einen Konvektionstrockner oder durch NIR (Nahinfrarot) auf eine Feuchte von ca. 6 Gew% getrocknet, so dass sich die Harzschicht im B-Zustand befindet.

### Ausführungsbeispiel 2a: Bedrucken eines ersten Imprägnates mit Tintenaufnahmeschicht

Das zu bedruckende Papier wird in einer Imprägniervorrichtung vorder- und rückseitig mit einem flüssigen Melaminharz imprägniert. Dabei werden ca. 50 g Melaminharz /m² mit einem Feststoffgehalt von ca. 50% aufgetragen.

Anschließend wird eine pigmentierte (TiO₂) Tintenaufnahmeschicht (synthetisches Silikat mit Polyvinylalkohol als Bindemittel) (Schichtdicke 40 µm; nach Trocknen bei 125°C trockenes Flächengewicht 4g/m²) und eine Primerschicht aufgetragen und der Schichtaufbau getrocknet.

Nach dem Trocknen wird auf das so erhaltene Imprägnat (Papiergewicht: 80 g/m²) eine Dekorschicht im Digitaldruckverfahren unter Verwendung einer CRYK-Tinte mit der obigen Zusammensetzung aufgebracht. Die Druckfarben werden in einer Menge zwischen 5 und 10 g/m² aufgebracht.

Das bedruckte Papier kann nach dem Bedrucken mit einer Melamin-Formaldehyd-Harzschicht als Schutzschicht versehen werden.

Das Papier wird anschließend in einen Konvektionstrockner oder durch NIR (Nahinfrarot) auf eine Feuchte von ca. 6 Gew% getrocknet, so dass sich die Harzschicht im B-Zustand befindet.

### Ausführungsbeispiel 2b: Bedrucken eines zweiten Imprägnates mit Tintenaufnahmeschicht

Das zu bedruckende Papier wird in einer in einer Auftragsvorrichtung mit Melaminharz-Pulver in einer Menge von 25 g/m² mit Hilfe von Tribopistolen beschichtet. Im Melaminharz-Pulver waren die üblichen Hilfsstoffe wie Härter, Trennmittel usw. enthalten. Danach wird das Pulver durch Infrarotstrahlung angeschmolzen.

Anschließend wird eine pigmentierte (TiO₂) Tintenaufnahmeschicht (synthetisches Silikat mit Polyvinylalkohol als Bindemittel) (Schichtdicke 40 µm; nach Trocknen bei 125°C trockenes Flächengewicht 4g/m²) und eine Primerschicht aufgetragen und der Schichtaufbau getrocknet.

Nach dem Trocknen wird auf das so erhaltene Imprägnat (Papiergewicht: 80 g/m²) eine Dekorschicht im Digitaldruckverfahren unter Verwendung einer CRYK-Tinte mit der obigen Zusammensetzung aufgebracht. Die Druckfarben werden in einer Menge zwischen 5 und 10 g/m² aufgebracht.

Das bedruckte Papier kann nach dem Bedrucken mit einer Melamin-Formaldehyd-Harzschicht als Schutzschicht versehen werden.

Das Papier wird anschließend in einen Konvektionstrockner oder durch NIR (Nahinfrarot) auf eine Feuchte von ca. 6 Gew% getrocknet, so dass sich die Harzschicht im B-Zustand befindet.

### Ausführungsbeispiel 2c: Bedrucken eines dritten Imprägnates

Das zu bedruckende Papier wird in einer Imprägniervorrichtung vorder- und rückseitig mit einem Melaminharz imprägniert. Dabei werden ca. 50 g Melaminharz /m² mit einem Feststoffgehalt von ca. 50% aufgetragen.

Vor dem Trockner wird das Harz auf der zu bedruckenden Seite des Imprägnates mit einer Spezialeinrichtung (z. B. ein Messerrakel) abgezogen, damit Fasern zur Aufnahme der Druckertinte frei bleiben..

Nach dem Trocknen wird auf das so erhaltene Imprägnat (Papiergewicht: 80 g/m²) eine Dekorschicht im Digitaldruckverfahren unter Verwendung einer CRYK-Tinte mit der obigen Zusammensetzung aufgebracht. Die Druckfarben werden in einer Menge zwischen 5 und 10 g/m² aufgebracht.

Ein weiteres Trocknen des bedruckten Imprägnates ist nicht notwendig, da die Digitaldrucktinte nur wenig Feuchte einbringt.

### Ausführungsbeispiel 3: Bedrucken einer Platte mit Flüssigoverlay

Eine HDF-Platte (Faserplatte mit erhöhter Rohdichte) wird zunächst mit einem wässrigen Kunstharz (Melamin-Formaldehyd-Harz) vorbeschichtet. Dabei liegt die Auftragsmenge bei 20 - 50 g Harz flüssig/m² (Feststoffgehalt: ca. 55%). Das Harz enthält die üblichen Hilfsstoffe wie Netzmittel, Härter, Trennmittel und Entschäumer. Danach wird das aufgetragene Harz in einem Konvektionstrocker oder einem Nahinfrarot-Ofen auf eine Feuchte von ca. 20% getrocknet. Dann werden mehrere Schichten einer wasserbasierten, pigmentierten Grundierung aufgetragen (5 - 8 x). Nach jedem Auftrag wird die Grundierung mit Hilfe von einem Konvektionstrockner oder einem Nahinfrarot-Trockner getrocknet.

Im Folgenden wird die grundierte Platte mit einem Digitaldrucker mit einem Motiv bedruckt. Dabei werden ca. 6 - 8 g/m² der wasserbasierten CRYK-Digitaldrucktinte verwendet.

Nach dem Trocknen der Dekorschicht werden in einem ersten Walzenauftragsaggregat ca. 70 g Melaminharz fl. (Feststoffgehalt: 55 Gew%) die üblichen Hilfsstoffe enthaltend (Härter, Netzmittel usw.) auf die bedruckte Plattenoberfläche aufgetragen. Auf die Plattenunterseite wird ebenfalls mit dem ersten Walzenauftragsaggregat ein Melaminharz aufgetragen (Auftragsmenge: 60 g Harz fl. /m², Feststoffgehalt: ca. 55 Gew%).

Danach werden auf die Oberfläche mit einer Streuapparatur 14 g Korund /m² (F 200) aufgestreut. Durch einen Abstand von ca. 5 m bis zum Trockner wird es dem Korund ermöglicht in das Melaminharz einzusinken. Dann durchläuft die Platte einen Umlufttrockner. Danach wird eine Melamin-Harzschicht (Feststoffgehalt: 55 Gew%) in einer Menge von 25 g/m² aufgetragen. Auch diese enthält die üblichen Hilfsstoffe. Auf die Plattenunterseite wird ebenfalls mit einem Walzenauftragsaggregat ein Melaminharz aufgetragen (Auftragsmenge: 50 g Harz fl. /m², Feststoffgehalt: ca. 55 Gew%). Wieder wird die Platte in einem Umlufttrockner getrocknet.

Danach wird auf die Plattenoberfläche ein Melaminharz aufgetragen, das zusätzlich noch Glaskugeln enthält. Diese haben einen Durchmesser von 60 - 80 µm. Die Auftragsmenge des Harzes liegt bei ca. 20 g Melaminharz fl. / m² (Feststoffgehalt: 61,5 Gew%). In der Rezeptur ist neben dem Harter und dem Netzmittel auch ein Trennmittel enthalten. Die Auftragsmenge an Glaskugeln liegt bei ca. 3 g/m². Auf die Plattenunterseite wird ebenfalls mit einem Walzenauftragsaggregat ein Melaminharz aufgetragen (Auftragsmenge: 40 g Harz fl. /m², Feststoffgehalt: ca. 55 Gew%). Die Platte wird wiederum in einem Umlufttrockner getrocknet und danach nochmals mit einem Melaminharz beschichtet, das Glaskugeln enthält. Als weitere Komponente ist Zellulose (Vivapur 302) enthalten. Es werden wiederum ca. 20 g Melaminharz fl. / m² (Feststoffgehalt: 61,6 Gew%) aufgetragen. Dabei werden wieder ca. 3 g Glaskugeln und 0,25 g Zellulose / m² aufgetragen. In den Rezepturen ist neben dem Harter und dem Netzmittel auch ein Trennmittel enthalten. Auf die Plattenunterseite wird ebenfalls mit einem Walzenauftragsaggregat ein Melaminharz aufgetragen (Auftragsmenge: 30 g Harz fl. /m², Feststoffgehalt: ca. 55 Gew%). Das Harz wird wiederum in einem Umlufttrockner getrocknet und danach wird die Platte in einer Kurztaktpresse bei 200°C und einem Druck von 400 N/cm² verpresst. Die Presszeit betrug 10 Sekunden. Als Strukturgeber wurde ein Pressblech mit einer Holzstruktur verwendet.

### Ausführungsbeispiel 4: Bedrucken einer Platte mit Pulveroverlay

In einer Produktionslinie werden 8 mm HDF vereinzelt, mit Hilfe von Bürsten von Staub befreit und denn über Rollentransporte weitertransportiert.

In einer Auftragsvorrichtung werden sie dann mit Melaminharz-Pulver in einer Menge von 25 g/m² mit Hilfe von Tribopistolen beschichtet. Im Melaminharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung(Umluft) beschichtet. Bei der Farbgrundierung handelt es sich um ein Gemisch aus Kasein und Pigment (Titandioxid). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung.

Danach wird die Platte mit einem Digitaldrucker unter Verwendung der wässrigen CRYK-Tinte bedruckt. Die Auftragsmengen an Farbe liegen bei 3 bis 15 g fl. / m². Die Farbe wird über IR-Strahlung oder Umluft getrocknet.

Auf den Druck wird mit einer Streuvorrichtung Korund aufgestreut (Auftragsmenge: 20 g Korund/m², F 180).

Danach wird wiederum mit einer Tribopistole Melaminharz-Pulver aufgetragen (Auftragsmenge: 80 g/m²). Dieses Melaminharz-Pulver wird wieder mit Hilfe eines IR-Strahlers angeliert. Im Melaminharzpulver waren die üblichen Hilfsstoffe wie Härter, Trennmittel usw. enthalten.

Danach wird die Platte in einer KT-Presse zusammen mit einem Gegenzugimprägnat verpresst. Die Pressbedingungen waren: T=200°C, p= 40 kg/cm² und t= 25 sec. Die verpresste Platte wurde anschließend visuell begutachtet, wobei sich keine Auffälligkeiten zeigten. Die anschließend durchgeführten Oberflächenprüfungen gemäß der DIN EN 15468 - August 2018 zeigten ebenfalls keine Auffälligkeiten. Es wurden alle Anforderungen der Beanspruchungsklasse 32 erfüllt.

## Patentansprüche

1. Verfahren zur Herstellung von mindestens einem mit einem Druckdekor versehenen Trägermaterials, wobei das Druckdekor mittels Digitaldruck auf das mindestens eine Trägermaterial aufgetragen wird, wobei das Trägermaterial mindestens ein Rohpapier, mindestens ein imprägniertes Papier oder mindestens eine Werkstoffplatte ist,
**dadurch gekennzeichnet, dass**
die für den Digitaldruck verwendete Tinte eine wasserlösliche CRYK Tinte ist, die mindestens ein Cyanpigment, das rote Pigment PR207, das gelbe Pigment PY181 und mindestens ein schwarzes Kohlenstoffpigment enthält, und
wobei das Druckdekor ein Holzdekor ist, das im Farbraum in Richtung orange-rot verschoben ist.

2. Verfahren nach Anspruch 1, **dadurch gekennzeichnet, dass** das mindestens eine Cyanpigment ein Kupferphthalocyaninpigment ist, bevorzugt C.I. Pigment Blue 15:3 oder C.I. Pigment Blue 15:4, insbesondere bevorzugtC.I. Pigment Blue 15:3 ist.

3. Verfahren nach einem der vorhergehenden Ansprüche, **dadurch gekennzeichnet, dass** das schwarze Kohlenstoffpigment ein Russpigment ist, insbesondere ausgewählt aus der Gruppe Regal™ 400R, Mogul™, L, Elftex™ 320 from Cabot Co., or Carbon Black FW18, Special Black™ 250, Special Black™ 350, Special Black™ 550, Printex™ 25, Printex™ 35, Printex™ 55, Printex™ 90, Printex™ 150T from DEGUSSA Co., MA8 from MITSUBISHI CHEMICAL Co., and C.I. Pigment Black 7 and C.I. Pigment Black 11 ist.

4. Verfahren nach einem der vorhergehenden Ansprüche, **dadurch gekennzeichnet, dass** die Pigmentkonzentration bei mehr als 2 Gew.-%, bevorzugt zwischen 2,2 und 6 Gew%, insbesondere bevorzugt zwischen 2,5 und 5 Gew%, bezogen auf das Gesamtgewicht der Tinte, liegt.

5. Verfahren nach einem der vorhergehenden Ansprüche, **dadurch gekennzeichnet, dass** der Wasseranteil in der Tinte bei mindestens 50% liegt, bevorzugt bei mindestens 55% liegt.

6. Verfahren nach einem der vorhergehenden Ansprüche, **dadurch gekennzeichnet, dass** die Tinte mindestens ein organisches Lösemittel mit einem Anteil von weniger als 45%, bevorzugt von weniger als 43% enthält.

7. Verfahren nach Anspruch 1, **dadurch gekennzeichnet, dass** das mindestens eine Rohpapier mindestens eine Papierbahn ohne Imprägnierung mit mindestens einer weiße Pigmente enthaltenen Tintenaufnahmeschicht ist.

8. Verfahren nach Anspruch 1, **dadurch gekennzeichnet, dass** das mindestens eine imprägnierte Papier eine imprägnierte Papierbahn mit mindestens einer Primerschicht und mindestens einer weiße Pigmente enthaltenen Tintenaufnahmeschicht ist.

9. Verfahren nach einem der Ansprüche 1-8, **dadurch gekennzeichnet, dass** das Papier nach dem Bedrucken mit mindestens einem Harz imprägniert wird.

10. Verfahren nach einem der Ansprüche 1-9, **dadurch gekennzeichnet, dass** das bedruckte und imprägnierte Papier mit einer Werkstoffplatte, mindestens einem Schutzpapier und ggfs. einem Gegenzugpapier verpresst wird.

11. Verfahren nach Anspruch 1, **dadurch gekennzeichnet, dass** das die mindestens eine Werkstoffplatte, eine Holzwerkstoffplatte, wie MDF-Platte, HDF-Platte, OSB-Platte, Spanplatte oder WPC, Kunststoffplatte wie SPC (stone plastic composite), Zementfaserplatte ist, die mindestens eine weiße Pigmente enthaltene Grundierung aufweist.

12. Verfahren nach Anspruch 1, **dadurch gekennzeichnet, dass** die bedruckte Holzwerkstoffplatte mit mindestens einer Verschleißschutzschicht versehen wird.

## Claims

1. Method for the production of at least one carrier material provided with a print decoration, wherein the print decoration is applied to the at least one carrier material by means of digital printing, wherein the carrier material is at least one base paper, at least one impregnated paper or at least one material board,
**characterised in that**
the ink used for digital printing is a water-soluble CRYK ink containing at least one cyan pigment, the red pigment PR207, the yellow pigment PY181 and at least one black carbon pigment, and
where the print decor is a wood decor shifted towards orange-red in the colour space.

2. Method according to claim 1, **characterized in that** the at least one cyan pigment is a copper phthalocyanine pigment, preferably C.I. Pigment Blue 15:3 or C.I. Pigment Blue 15:4, more preferably C.I. Pigment Blue 15:3.

3. Method according to any one of the preceding claims, **characterized in that** the black carbon pigment is a carbon black pigment, in particular selected from the group consisting of Regal™ 400R, Mogul™, L, Elftex™ 320 from Cabot Co, or Carbon Black FW18, Special Black™ 250, Special Black™ 350, Special Black™ 550, Printex™ 25, Printex™ 35, Printex™ 55, Printex™ 90, Printex™ 150T from DEGUSSA Co, MA8 from MITSUBISHI CHEMICAL Co, and C.I. Pigment Black 7 and C.I. Pigment Black 11.

4. Method according to any one of the preceding claims, **characterized in that** the pigment concentration is more than 2% by weight, preferably between 2.2 and 6% by weight, more preferably between 2.5 and 5% by weight, based on the total weight of the ink.

5. Method according to any one of the preceding claims, **characterized in that** the water content in the ink is at least 50%, preferably at least 55%.

6. Method according to any one of the preceding claims, **characterized in that** the ink contains at least one organic solvent in a proportion of less than 45%, preferably less than 43%.

7. Method according to claim 1, **characterized in that** the at least one base paper is at least one paper web without impregnation with at least one ink-receiving layer containing white pigments.

8. Method according to claim 1, **characterized in that** the at least one impregnated paper is an impregnated paper web having at least one primer layer and at least one ink receiving layer containing white pigments.

9. Method according to any one of claims 1-8, **characterized in that** the paper is impregnated with at least one resin after printing.

10. Method according to one of the claims 1-9, **characterized in that** the printed and impregnated paper is pressed with a material board, at least one protective paper and optionally a backing paper.

11. Method according to claim 1, **characterized in that** the at least one material board is a wood material board, such as MDF board, HDF board, OSB board, chipboard or WPC, plastic board such as SPC (stone plastic composite), cement fibre board, which has at least one primer containing white pigments.

12. Method according to claim 1, **characterized in that** the printed wood-based panel is provided with at least one wear protection layer.

## Revendications

1. Procédé pour fabriquer au moins un matériau de support pourvu d'un décor imprimé, dans lequel le décor imprimé est appliqué sur l'au moins un matériau de support au moyen d'une impression numérique, dans lequel le matériau de support est au moins un papier brut, au moins un papier imprégné ou au moins un panneau de matériau,
**caractérisé en ce que**
l'encre utilisée pour l'impression numérique est une encre CMJN hydrosoluble, qui contient au moins un pigment cyan, le pigment rouge PR207, le pigment jaune PY181 et au moins un pigment noir de carbone, et
dans lequel le décor imprimé est un décor bois, qui est déplacé dans l'espace chromatique en direction de l'orange-rouge.

2. Procédé selon la revendication 1, **caractérisé en ce que** l'au moins un pigment cyan est un pigment phtalocyanine de cuivre, de préférence est le pigment bleu C.I. 15:3 ou pigment bleu C.I. 15:4, de manière particulièrement préférée le pigment bleu C.I. 15:3.

3. Procédé selon l'une quelconque des revendications précédentes, **caractérisé en ce que** le pigment noir de carbone est un pigment suie, en particulier choisi dans le groupe Regal™ 400R, Mogul™, L, Elftex™ 320 de Cabot Co., ou Carbon Black FW18, Spécial Black™ 250, Spécial Black™ 350, Spécial Black™ 550, Printex™ 25, Printex™ 35, Printex™ 55, Printex™ 90, Printex™ 150T de DEGUSSA Co., MA8 de MITSUBISHI CHEMICAL Co., et le pigment noir C.I. 7 et le pigment noir C.I. 11.

4. Procédé selon l'une quelconque des revendications précédentes, **caractérisé en ce que** la concentration de pigment est supérieure à 2 % en poids, de préférence comprise entre 2,2 et 6 % en poids, de manière particulièrement préférée entre 2,5 et 5 % en poids, rapporté au poids total de l'encre.

5. Procédé selon l'une quelconque des revendications précédentes, **caractérisé en ce que** le pourcentage d'eau dans l'encre est d'au moins 50 %, de préférence d'au moins 55 %.

6. Procédé selon l'une quelconque des revendications précédentes, **caractérisé en ce que** l'encre contient au moins un solvant organique avec un pourcentage inférieur à 45 %, de préférence inférieur à 43 %.

7. Procédé selon la revendication 1, **caractérisé en ce que** l'au moins un papier brut est au moins une bande de papier sans imprégnation avec au moins une couche de réception d'encre contenue des pigments blancs.

8. Procédé selon la revendication 1, **caractérisé en ce que** l'au moins un papier imprégné est une bande de papier imprégné avec au moins une couche de fond et au moins une couche de réception d'encre contenue des pigments blancs.

9. Procédé selon l'une quelconque des revendications 1 à 8, **caractérisé en ce que** le papier est imprégné avec au moins une résine après l'impression.

10. Procédé selon l'une quelconque des revendications 1 à 9, **caractérisé en ce que** le papier imprimé et imprégné est pressé avec un panneau de matériau, au moins un papier protecteur et le cas échéant un papier de contre-traction.

11. Procédé selon la revendication 1, **caractérisé en ce que** l'au moins un panneau de matériau, est un panneau en matériau dérivé du bois, tel qu'un panneau MDF, panneau HDF, panneau OSB, panneau de particules ou WPC, panneau plastique tel que SPC (composite pierre plastique), panneau fibres-ciment, qui présente au moins une couche d'apprêt contenue des pigments blancs.

12. Procédé selon la revendication 1, **caractérisé en ce que** le panneau en matériau dérivé du bois imprimé est pourvu d'au moins une couche de protection contre l'usure.
